# EUROPEAN PATENT SPECIFICATION

(11) **EP 2 620 060 B1**
(45) Date of publication and mention of the grant of the patent: **12.02.2020**
(21) Application number: 11826721.0
(22) Date of filing: 06.09.2011
(51) Int. Cl.: A23L 2/56, A23L 27/00, A23L 27/21, A23L 27/22, A23L 27/26

(54) **METHOD FOR PRODUCING THERMALLY REACTED SEASONING**
VERFAHREN ZUR HERSTELLUNG EINES GEWÜRZES DURCH WÄRMEREAKTION
PROCÉDÉ DE PRODUCTION D'UN ASSAISONNEMENT TRAITÉ THERMIQUEMENT

(30) Priority: 24.09.2010 JP 2010214412
(43) Date of publication of application: 31.07.2013
(73) Proprietor: Asahi Group Holdings, Ltd., Tokyo 130-8602 (JP)
(72) Inventor: OTSUSHI, Noboru, Moriya-shi Ibaraki 302-0106 (JP)
(74) Representative: Desaix, Anne
(86) International application number: PCT/JP2011/070199
(87) International publication number: WO 2012/039275

(56) References cited:
- JP-A- H0 491 762
- JP-A- H10 327 802
- JP-A- 2006 042 637
- JP-A- 2006 129 835
- JP-A- 2007 166 902
- JP-A- 2007 166 902
- JP-A- 2008 125 361
- JP-A- 2008 125 361
- JP-A- 2009 261 253
- JP-A- 2009 261 385
- JP-A- 2009 261 385
- JP-A- 2010 081 886
- JP-A- 2010 148 517

## Description

### Field of the Invention

The present invention relates to a method for producing a seasoning, especially through a thermal reaction. The application also discloses a seasoning and a food or beverage.

### Description of the related art

A method is known in the prior art for producing a seasoning having a flavor resembling that of roasted meat by heating a yeast extract containing glutathione and a sugar (see Patent Document 1) . In addition, a method is also known for producing a seasoning that comprises heating glutamic acid in the presence of glutathione (see Patent Document 2) . Moreover, a seasoning is known that contains glutamic acid and glutathione (see Patent Documents 3 and 4).

It is known from JP 2007 166902 A (AJINOMOTO KK) a method for producing a seasoning having a roasted meat flavor, where vegetable ground products are added at the time of heating a mixture in a liquid state, but in the absence of fat.

It is known from JP H04 91762 A (AJINOMOTO CO, INC) a process for producing a flavor composition having a good roast meat-like scent and flavor, involving heating in a liquid state a mixture including γ-glutamylcysteine and saccharide.

It is known from JP 2008 125361 A (KIRIN FOOD-TECH CO., LTD.) the provision of a powder seasoning having a meat-like flavor using a heat extract, which is prepared by heating a mixture in a powder state.

It is known from JP 2009 261385 A (KIRIN FOOD-TECH CO., LTD.) a cheese flavor enhancer which is prepared by heating a mixture of edible vegetable fat and oil and yeast extract powder in a powder state.

However, although there is an extremely high demand among consumers for a seasoning that can be added to foods and beverages, has favorable taste, and is able to impart flavor, saltiness, richness or meat flavor and the like more effectively than conventional seasonings, a seasoning has yet to be provided that is able to adequately satisfy this demand.

### Patent Documents

Patent Document 1: Japanese Patent Publication No. 2903659
Patent Document 2: Japanese Patent Publication No. 3458514
Patent Document 3: Japanese Examined Patent Application, Second Publication No. S63-13661
Patent Document 4: Japanese Unexamined Patent Application, First Publication No. 2001-78702

### DISCLOSURE OF THE INVENTION

### Problems to be Solved by the Invention

An object of the present invention is to solve the various problems of the prior art as described above and achieve the following objectives. Namely, an object of the present invention is to provide a method for producing a seasoning that can be added to foods and beverages, has favorable taste, and is able to impart flavor (Umami), saltiness, richness, sweetness, foretaste, aftertaste or meat flavor and the like, a seasoning, flavor enhancer, saltiness enhancer, richness enhancer and meat flavor enhancer, and a food or beverage containing that seasoning.

### Means for Solving the Problems

Means for solving the aforementioned problems is the method of the invention as defined in the appended claims.

### Effects of the Invention

According to the present invention, a method for producing a seasoning that is able to solve the various problems of the prior art as previously described and achieve the aforementioned objectives, is able to be added to foods and beverages, has a favorable taste, and is able to impart flavor, saltiness, richness, sweetness, foretaste, aftertaste or meat flavor and the like. It is also described that a seasoning, flavor enhancer, saltiness enhancer, richness enhancer or meat flavor enhancer, and a food or beverage containing the seasoning can be provided.

The invention more particularly relates to a method as set forth in any one of claims 1 to 8.

### BRIEF DESCRIPTION OF THE DRAWINGS

FIG. 1 is a graph indicating the results of a parameter sensory evaluation of a yeast extract having a high glutamic acid content.
FIG. 2 is a graph indicating the results of a sensory evaluation of an application test.

### BEST MODE FOR CARRYING OUT THE INVENTION

### (Method for Producing Seasoning)

The method for producing a seasoning described herein comprises a step for heating a mixture containing a yeast extract having a high glutamic acid content and a yeast extract having a high glutathione content, and may further comprise other steps suitably selected as necessary. The method of the invention is more particularly as defined in claim 1.

### - Mixture -

The aforementioned mixture at least contains a yeast extract having a high glutamic acid content and a yeast extract having a high glutathione content, and further contains other yeast extracts, reducing sugar, salt or water and the like as necessary. According to the invention, the mixture is as defined in claim 1 a).

### -- Yeast Extract having High Glutamic Acid Content --

In a particular aspect, there are no particular limitations on the aforementioned yeast extract having a high glutamic acid content and can be suitably selected provided the glutamic acid content thereof is 10% by weight or more as powdered yeast extract and can be provided for edible use, examples of which include brewer's yeast extract, bread yeast extract and torula yeast extract. A commercially available product can also be used for the aforementioned yeast extract having a high glutamic acid content, and examples of such commercially available products include Hyper Meast HG (Asahi Food & Healthcare Co., Ltd., glutamic acid content: 18% by weight or more) and Hyper Meast HG Paste (Asahi Food & Healthcare Co., Ltd.).

In a particular aspect of the present description, there are no particular limitations on the content of the yeast extract having a high glutamic acid content in the aforementioned mixture provided it is 3% by weight to 24% by weight as powdered yeast extract, and although the content thereof can be suitably selected, it is preferably 6% by weight to 21% by weight and more preferably 9% by weight to 18% by weight. If the aforementioned content is less than 3% by weight, meat flavor, flavor (Umami) and richness are lacking, while if the content exceeds 24% by weight, meat flavor decreases while a roasted sensation and off-flavor increase. On the other hand, if the aforementioned content is 9% by weight to 18% by weight, meat flavor is generated and off-flavor is reduced, thereby making this advantageous. According to the invention, the content of the yeast extract having a high glutamic acid content is as defined in claim 1.

Here, "powdered yeast extract" refers to a yeast extract having a moisture content of 5% by weight or less and solid fraction of 95% by weight or more.

In addition, when using the aforementioned yeast extract having a high glutamic acid content in the method for producing a seasoning as described herein, the yeast extract may be in the form of a powder, paste or solution. In the case the yeast extract having a high glutamic acid content is in the form of a paste or solution, the concentration of the yeast extract having a high glutamic acid content in the mixture may be suitably determined based on the powdered yeast extract.

Furthermore, there are no particular limitations on the "yeast extract in the form of a paste or liquid" provided the moisture content thereof does not exceed 5% by weight, and although it can be suitably selected corresponding to the objective, this typically refers to a yeast extract having a moisture content of 20% by weight to 35% by weight and solid fraction of 65% by weight to 80% by weight.

Furthermore, although there are some commercially available yeast extracts to which salt has been initially added, in the case of using such a yeast extract, the aforementioned moisture content is calculated based on the yeast extract solid fraction after omitting the salt.

### -- Yeast Extract having High Glutathione Content --

In a particular aspect, there are no particular limitations on the aforementioned yeast extract having a high glutathione content and can be suitably selected provided the glutathione content thereof is 5% by weight or more as powdered yeast extract and can be provided for edible use, examples of which include brewer's yeast extract, bread yeast extract and torula yeast extract. A commercially available product can also be used for the aforementioned yeast extract having a high glutathione content, and examples of such commercially available products include High Thione Extract YH-15 (Kohjin Co., Ltd., glutathione content: 15% by weight or more).

In a particular aspect of the present description, there are no particular limitations on the content of the yeast extract having a high glutathione content in the aforementioned mixture provided it is 5% by weight to 35% by weight as powdered yeast extract, and although the content thereof can be suitably selected, it is preferably 8% by weight to 25% by weight and more preferably 11% by weight to 20% by weight. If the aforementioned content is less than 5% by weight, the generation of meat flavor decreases considerably, while if the content exceeds 35% by weight, off-flavor (such as the smell of sulfur) becomes strong and flavor decreases. On the other hand, if the aforementioned content is 11% by weight to 20% by weight, meat flavor is generated and off-flavor is reduced, thereby making this advantageous. According to the invention, the content of the yeast extract having a high glutathione content is as defined in claim 1.

In addition, when using the aforementioned yeast extract having a high glutathione content in the method for producing a seasoning as described herein, the yeast extract may be in the form of a powder or solution (paste) . In the case the yeast extract having a high glutathione content is in the form of a solution, the concentration of the yeast extract having a high glutathione content in the mixture may be suitably determined based on the powdered yeast extract.

There are no particular limitations on the method used to prepare the aforementioned yeast extracts, and a method can be suitably selected according to the objective, examples of which include autolysis (method in which yeast cells are solubilized using protease and the like inherently present in the yeast cells), zymolysis (method consisting of solubilization by adding an enzyme preparation derived from microorganisms, plants and the like), hot water extraction (method consisting of solubilization by immersing in hot water for a fixed period of time), acid and/or alkaline decomposition (method consisting of solubilization by adding various acids or bases), physical crushing (method consisting of crushing by ultrasonic treatment, high-pressure homogenization or mixing and/or grinding with a solid such as glass beads), and freezing-thawing (method consisting of crushing by carrying out at least one cycle of freezing and thawing). These methods for preparing a yeast extract are well known among persons with ordinary skill in the art. One type of these methods may be used alone or two or more types may be used in combination.

For example, in the case of using brewer's yeast extract, brewer's yeast obtained in a beer production process is suitably filtered and washed, the yeast cells are subjected to crushing and/or decomposition according to at least one of the methods described above, and the resulting crude yeast is either used directly and/or additionally subjected to filtration and concentration and the like to obtain a refined yeast in the form of brewer's yeast extract.

The glutamic acid content in the aforementioned yeast extract can be measured by ordinary total amino acid determination using the Acquity UPLC® (manufactured by Nihon Waters K.K.).

In addition, the glutathione content in the aforementioned yeast extract can be determined by measuring total glutathione in accordance with the method of Titze et al. (Analytical Biochemistry, Vol. 27, p. 502 (1969)) using a spectrophotometer (Model U-2800A Spectrophotometer, Hitachi Biotechnologies, Ltd.) .

### -- Reducing Sugar --

The aforementioned mixture preferably further contains a reducing sugar. Although there are no particular limitations on the reducing sugar and the reducing sugar can be suitably selected, xylose, glucose, fructose, sucrose, maltose, arabinose, lactose and ribose are preferable. One type of these reducing sugars may be used alone or two or more types may be used in combination. Among these, xylose is more preferable from the viewpoint of being able to generate good-quality flavor in a short period of time due to its high reactivity.

The content of the aforementioned reducing sugar in the mixture is preferably 0% by weight to 5% by weight. In the case of not adding the reducing sugar and/or in the case the content thereof is low, there is no roasted flavor or off-flavor and a good-quality meat flavor is obtained, thereby making this preferable with respect to this point, while in the case of a high content thereof, in addition to good-quality meat flavor, a rich, suitable roasted flavor (such as roast beef flavor) is obtained, thereby making this preferable with respect to this point. In this manner, various types of flavors not found in the prior art can be obtained by suitably selecting the content of the aforementioned reducing sugar.

On the other hand, if the content of the reducing sugar exceeds 5% by weight, roasted flavor and off-flavor increase considerably and the generation of meat flavor decreases remarkably.

There are no particular limitations on the method used to heat the aforementioned mixture, and conditions such as heating temperature, heating time or mixture pH can be suitably selected.

In an aspect of the present disclosure, there are no particular limitations on the aforementioned heating temperature provided it is 90°C to 150°C, and although the heating temperature can be suitably selected corresponding to the objective, it is preferably 90°C to 130°C, more preferably 95°C to 125°C, and particularly preferably 100°C to 120°C. If the aforementioned heating temperature is lower than 90°C, meat flavor is unable to be effectively obtained, while if the heating temperature is higher than 150°C, roasted flavor and off-flavor increase. On the other hand, if the aforementioned heating temperature is 100°C to 120°C, there is considerable generation of meat flavor and generation of off-flavor is low, thereby making this advantageous.

The aforementioned heating time is preferably 1 minute to 4 hours and more preferably 1 minute to 1 hour. If the aforementioned heating time is less than 1 minute, there is a lack of stability, while if the heating time exceeds 4 hours, off-flavor increases. On the other hand, if the aforementioned heating time is 1 minute to 1 hour, this is advantageous in terms of the quality of the generated flavor and production efficiency.

The pH of the aforementioned mixture is preferably 3 to 8 and more preferably 4 to 6. If the aforementioned pH is lower than 3, meat flavor may not be generated, while if the pH is higher than 8, roasted flavor and off-flavor increase, while flavor and richness decrease. On the other hand, if the aforementioned pH is from 4 to 6, it is advantageous in terms of the generation of good-quality flavor and favorable taste.

According to the invention, the heating temperature, heating time and pH are as defined in claim 1.

In addition, in the method used to heat the aforementioned mixture, the mixture is preferably heated under the aforementioned heating conditions while stirring at 100 rpm to 600 rpm, and an example of a device that can be used for that purpose is a pressurized thermal reactor (manufactured by Taiatsu Techno Corp.).

Although the product obtained following thermal reaction can be used directly as a seasoning and/or used directly after cooling (brown paste having a Brix value of about 50 to 70), it may further be purified. The resulting liquid seasoning may further be concentrated (Brix value of about 80) or diluted, or it may be converted to a powder by a drying step using spray drying, freeze drying, vacuum drying or air drying and the like.

An additive ordinarily permitted for use in seasonings can be further added to the seasoning obtained in this manner depending on the particular case.

The method for producing a seasoning of the present invention comprises a step for adding an oil to the aforementioned mixture followed by heating, and may further comprise other steps such as an emulsification step or drying step suitably selected as necessary.

According to the aforementioned method for producing a seasoning, a seasoning is produced that can be added to foods and beverages, has favorable taste, and is able to impart meat flavor and the like. In addition, taste can be altered by suitably adjusting the amount of the aforementioned seasoning added as well as the amount of the mixture, thereby enabling the seasoning to be used as a salad dressing and the like. Moreover, a seasoning can also be produced in the form of an emulsified composition in which an aqueous layer and oil layer have been emulsified, and a seasoning can be obtained in which these layers have been dried in a drying step such as spray drying.

According to the invention, the method for producing a seasoning comprises a step for adding an oil to the aforementioned mixture, heating the mixture and fractionating the oil layer, and may further comprise other steps suitably selected as necessary.

According to the aforementioned method for producing a seasoning, a seasoning is produced that can be added to foods and beverages, has a favorable taste, and is able to impart meat flavor and the like, and the seasoning produced is in the form of a flavoring oil.

### - Oil -

There are no particular limitations on the aforementioned oil provided it is an edible oil, and although it can be suitably selected corresponding to the objective, vegetable oil is preferable in terms of not containing animal allergens and being able to effectively impart meat flavor similar to that associated with animal fats and oils by using the method for producing a seasoning of the present invention, while animal oil is preferable in terms of being able to enhance meat flavor similar to that associated with animal fats and oils by using the method for producing a seasoning of the present invention.

There are no particular limitations on the aforementioned vegetable oil and can be suitably selected corresponding to the objective, examples of which include sunflower oil, palm oil, canola oil (rapeseed oil), soybean oil, rice oil, cottonseed oil and corn oil. Among these, sunflower oil, palm oil, canola oil and soybean oil are preferable since they are representative vegetable oils; sunflower oil, palm oil and canola oil are more preferable since they do not constitute major allergens, sunflower oil and canola oil are particularly preferable since they are liquids at room temperature and have superior handling ease, and sunflower oil is most preferable since it is lean and resistant to oxidation.

There are no particular limitations on the content of the aforementioned mixture provided it allows the providing of a seasoning that can be added to foods and beverages, has favorable taste and is able to impart meat flavor and the like, and although the content thereof can be suitably selected corresponding to the objective, the content of the mixture is preferably 0.5% by weight or more, more preferably 1% by weight or more and even more preferably 3% by weight or more based on the total weight of the mixture and oil.

If the aforementioned content is from 0.5% by weight to less than 3% by weight, a seasoning is produced that has a mild meat flavor, and this is advantageous in terms of being able to be preferably used to enhance taste and impart meat flavor to oily products such as salad dressings, garlic oil or onion oil. In addition, if the aforementioned content is 3% by weight or more, a seasoning is produced that has a stronger meat flavor. Thus, the content of the mixture can be suitably selected corresponding to the application in order to provide a seasoning having a desired meat flavor intensity.

There are no particular limitations on the method used to add the aforementioned oil to the aforementioned mixture, and a known method can be suitably selected corresponding to the objective, examples of which include a method consisting of preparing a suspension by mixing the aforementioned mixture with the aforementioned oil.

There are no particular limitations on the method used to heat the aforementioned suspension containing the aforementioned mixture and the oil, and conditions such as heating temperature, heating time or mixture pH can be suitably selected in the same manner as the method used to heat the aforementioned mixture. There are no particular limitations on the heating method, a known method can be suitably selected corresponding to the objective, and heating may be carried out without stirring or stirring may be suitably carried out under conditions such as stirring at 100 rpm to 600 rpm.

There are no particular limitations on the method used to fractionate the oil layer from the product obtained following thermal reaction of the aforementioned suspension, a known method can be suitably selected corresponding to the objective, and examples thereof include a method consisting of cooling or allowing the product to stand undisturbed after fractionating only the upper layer (oil layer) formed by layer separation, and a method consisting of discarding the separated lower layer (aqueous layer) and the boundary between the upper layer and lower layer to obtain only the upper layer (oil layer).

### (Seasoning)

The seasoning described herein is a seasoning obtained according to the aforementioned method for producing a seasoning, and other ingredients such as additives ordinarily permitted for use in seasonings can be further contained as necessary.

There are no particular limitations on the aforementioned additives, additives can be suitably selected corresponding to the objective, and examples thereof include sodium glutamate, inosinic acid, guanylic acid and thickening polysaccharides.

### (Flavor Enhancer)

The flavor enhancer described herein contains the aforementioned seasoning as an active ingredient thereof, and may further contain other ingredients such as additives ordinarily permitted for use in seasonings as necessary. The aforementioned flavor enhancer demonstrates a flavor enhancing action due to the action of the aforementioned seasoning contained therein as an active ingredient.

### (Saltiness Enhancer)

The saltiness enhancer described herein contains the aforementioned seasoning as an active ingredient thereof, and may further contain other ingredients such as additives ordinarily permitted for use in seasonings as necessary. The aforementioned saltiness enhancer demonstrates a saltiness enhancing action due to the action of the aforementioned seasoning contained therein as an active ingredient.

### (Richness Enhancer)

The richness enhancer described herein contains the aforementioned seasoning as an active ingredient thereof, and may further contain other ingredients such as additives ordinarily permitted for use in seasonings as necessary. The aforementioned richness enhancer demonstrates a richness enhancing action due to the action of the aforementioned seasoning contained therein as an active ingredient.

### (Meat Flavor Enhancer)

The meat flavor enhancer described herein contains the aforementioned seasoning as an active ingredient thereof, and may further contain other ingredients such as additives ordinarily permitted for use in seasonings as necessary. The aforementioned meat flavor enhancer demonstrates a meat flavor enhancing action due to the action of the aforementioned seasoning contained therein as an active ingredient.

### (Food or Beverage)

The food or beverage described herein incorporates at least any of the seasoning, flavor enhancer, saltiness enhancer, richness enhancer and meat flavor enhancer described herein, and may further contain other ingredients as necessary.

The aforementioned food or beverage refers to that for which there is little risk of impairing human health and which is ingested orally or by transintestinal administration during the course of ordinary social life, is not limited to classifications such as administrative classifications in the manner of foods or beverages, prescription drugs or quasi-drugs, and includes a wide range of products such as ordinary foods, health foods, foods with health claims, beauty foods, quasi-drugs or prescription drugs.

There are no particular limitations on the aforementioned food or beverage, and can be suitably selected corresponding to the objective, examples of which include beverages such as beer, beer-tasting beverages, soft drinks, carbonate beverages, nutritional drinks, fruit drinks and lactic acid drinks (and including concentrates and powdered forms of these beverages) ; frozen confections such as ice cream, ice sherbet or snow cones; noodles such as buckwheat noodles, wheat flour noodles, vermicelli, Japanese dumpling skins, Chinese dumpling skins, Chinese-style noodles and instant noodles; confections such as soft candy, hard candy, gum, chocolate, tablet candy, snacks, biscuits, jelly, jam, cream, baked confections or bread; marine products such as crab, salmon, clams, tuna, sardines, shrimp, bonito, horse mackerel, whale, oysters, saury, squid, blood clams, scallops, abalone, sea urchin, salmon roe or omer; processed marine and livestock products such as boiled fish paste, ham or sausage; milk products such as processed milk or fermented milk; oils, fats and processed oily foods such as salad oil, tempura oil, margarine, mayonnaise, shortening, whipping cream or salad dressing; seasonings such as sauces or gravies; pre-prepared in-pouch foods such as curry sauce, stew, chicken and rice, rice gruel, rice porridge, Chinese vegetables and rice, pork cutlet and rice, tempura and rice, braised eel and rice, hashed meat and rice, fish and vegetable soup, Chinese tofu sauce, beef and rice, spaghetti sauce, egg drop soup, rice omelet, Japanese dumplings, Chinese dumplings, hamburger or meat balls; simple foods such as salads or pickles; various forms of health foods, beauty foods or nutritional supplements; prescription drugs such as tablets, granules, capsules, drinks or lozenges; and quasi-drugs. Furthermore, the foods and beverages are not limited to the aforementioned examples.

The amount of the seasoning, flavor enhancer, saltiness enhancer, richness enhancer and meat flavor enhancer described herein added to the aforementioned food or beverage cannot be strictly defined since it varies according to the food or beverage to which it is added, and is preferably 0.05% by weight to 5.0% by weight.

Examples of the aforementioned other ingredients include supplemental raw materials and/or additives normally used when producing foods and beverages.

There are no particular limitations on the aforementioned raw materials and/or additives and they can be suitably selected corresponding to the objective, examples of which include glucose, fructose, sucrose, maltose, sorbitol, stevioside, rubusoside, corn syrup, lactose, citric acid, tartaric acid, malic acid, succinic acid, lactic acid, L-ascorbic acid, dl-α-tocopherol, sodium erythorbate, glycerin, propylene glycol, glycerin-fatty acid esters, polyglycerin-fatty acid esters, sucrose fatty acid esters, sorbitan fatty acid esters, gum arabic, carrageenan, casein, gelatin, pectin, agar, vitamin B, nicotinic amide, calcium pantothenate, amino acids, calcium salts, pigments, spices and preservatives.

The food or beverage described herein can be ingested orally on a routine basis, and is able to extremely effectively achieve at least any of the actions of flavor enhancing action, saltiness enhancing action, richness enhancing action and meat flavor enhancing action due to the action of the seasoning, flavor enhancer, saltiness enhancer, richness enhancer and meat flavor enhancer described herein.

Furthermore, although the food or beverage described herein is preferably applied to humans, it can also be applied to animals other than humans provided each of the actions and effects thereof are demonstrated.

### Examples

The following provides a more detailed explanation of the present invention by indicating examples thereof.

### (Example 1) - Comparative Example

A mixture obtained by mixing 16% by weight of a yeast extract having a high glutamic acid content (Hyper Meast HG, glutamic acid content: 18% by weight or more, Asahi Food & Healthcare Co., Ltd.), 19% by weight of a yeast extract having a high glutathione content (High Thione Extract YH-15, glutathione content: 15% by weight or more, Kohjin Co., Ltd.), 3.0% by weight of xylose, 14% by weight of salt and 48% by weight of water, was heated for 30 minutes at 120°C. Following completion of the reaction, the mixture was cooled to obtain a Seasoning 1 having a solid fraction of 50% by weight. Furthermore, the pH of the mixture was 5.0 (non-adjusted).

### (Examples 2 to 9) - Comparative Examples

Seasonings 2 to 9 of Examples 2 to 9 were obtained in the same manner as Example 1 with the exception of changing the formulation of the yeast extract having a high glutamic acid content as shown in Table 1. Furthermore, Meast Powder N (glutamic acid content: 3.7% by weight, Asahi Food & Healthcare Co., Ltd.) was used as a control yeast extract. In addition, the formulations of Examples 7 to 9 were prepared by correspondingly reducing the moisture content since the total content of the yeast extract exceeded 35% by weight.

### (Examples 10 to 16) - Comparative Examples

Seasonings 10 to 16 of Examples 10 to 16 were obtained in the same manner as Example 1 with the exception of changing the formulation of the yeast extract having a high glutathione content as shown in Table 4. Furthermore, Meast Powder N (glutamic acid content: 3.7% by weight, Asahi Food & Healthcare Co., Ltd.) was used as a control yeast extract. In addition, the formulations of Examples 15 and 16 were prepared by correspondingly reducing the moisture content since the total content of the yeast extract exceeded 35% by weight.

### (Comparative Examples 1 to 4)

Seasonings A to D of Comparative Examples 1 to 4 were obtained in the same manner as Example 1 with the exception of changing the formulation of yeast extract as shown in Table 1.

### (Comparative Example 5)

Seasoning E of Comparative Example 5 was obtained in the same manner as Example 1 with the exception of only carrying out mixing and not heating.

### (Comparative Example 6)

Seasoning F of Comparative Example 6 was obtained in the same manner as Example 1 with the exception of changing the formulation of the yeast extract as shown in Table 4.

### <Evaluation>

Sensory evaluations were carried out on the prepared Seasonings 1 to 9 (Examples 1 to 9) and Seasonings A to E (Comparative Examples 1 to 5) in the manner described below.

### «Evaluation 1: Parameter Sensory Evaluation 1 of Yeast Extract having High Glutamic Acid Content»

Seasonings 1, 3 and 5 (Examples 1, 3 and 5) and Seasoning A (Comparative Example 1) were respectively added to hot water at 70°C at 0.7% by weight (salt content: 0.3% by weight) followed by carrying out a sensory evaluation. The sensory evaluation was carried out in the form of a blind test using 11 in-house panelists, and the seasonings were evaluated for evaluation parameters consisting of "meat flavor", "flavor" and "richness" according to the evaluation criteria indicated below based on a score of 4 for each evaluation parameter in the evaluations of the Seasoning A serving as a control. The evaluation results were averaged and shown in Table 1.

### [Evaluation Criteria]

The evaluation parameters were evaluated to one of seven levels by respectively comparing with the control and assigning a score of 4 for the control.
7: Considerably stronger than the control
6: Clearly stronger than the control
5: Somewhat stronger than the control
4: Equally strong as the control
3: Somewhat weaker than the control
2: Clearly weaker than the control
1: Considerably weaker than the control

**[Table 1]**

| | Blend No. | Content of yeast extract having high glutamic acid content (wt%) | Content of yeast extract having high glutathione content (wt%) | Content of control yeast extract (wt%) | Heating | Sensory Evaluation | | |
|---|---|---|---|---|---|---|---|---|
| | | | | | | Meat flavor | Flavor | Richness |
| Comp. Ex. 1 | SA | 0 | 19 | 16 | ○ | 4 | 4 | 4 |
| Ex.2 | S2 | 3 | 19 | 13 | ○ | 4.1 | 4.4 | 4.2 |
| Ex.3 | S3 | 6 | 19 | 10 | ○ | 4.8 | 5.3 | 5.1 |
| Ex.4 | S4 | 9 | 19 | 7 | ○ | 5.2 | 5.3 | 5.1 |
| Ex.5 | S5 | 12 | 19 | 4 | ○ | 5.3 | 5.5 | 5.2 |
| Ex.6 | S6 | 15 | 19 | 1 | ○ | 5.5 | 5.8 | 5.2 |
| Ex.1 | S1 | 16 | 19 | 0 | ○ | 5.5 | 5.8 | 5.4 |
| Ex.7 | S7 | 18 | 19 | 0 | ○ | 5.5 | 5.9 | 5.5 |
| Ex.8 | S8 | 21 | 19 | 0 | ○ | 5.4 | 5.5 | 5.5 |
| Ex.9 | S9 | 24 | 19 | 0 | ○ | 4.8 | 5.3 | 5.3 |
| Comp. Ex.2 | SB | 30 | 5 | 0 | ○ | 3.2 | 4.4 | 4.2 |
| Comp. Ex.3 | SC | 35 | 0 | 0 | ○ | 2.9 | 4.3 | 3.8 |
| Comp. Ex.4 | SD | 0 | 0 | 35 | ○ | 3.1 | 2.4 | 3.2 |
| Comp. Ex.5 | SE | 16 | 19 | 0 | -- | 3.5 | 4.7 | 4.5 |

### <<Evaluation 2: Parameter Sensory Evaluation 2 of Yeast Extract having High Glutamic Acid Content>>

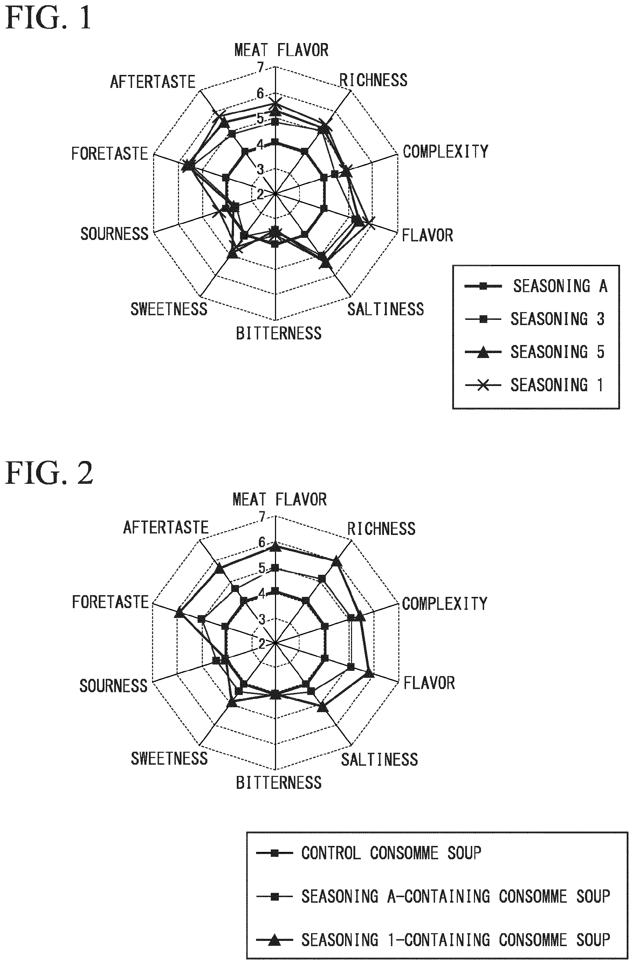

Seasonings 1, 3 and 5 (Examples 1, 3 and 5) and Seasoning A (Comparative Example 1) were respectively added to hot water at 70°C at 0.7% by weight (salt content: 0.3% by weight), and a sensory evaluation was carried out using each of the resulting samples. The sensory evaluation was carried out in the form of a blind test using 11 in-house panelists, and the seasonings were evaluated for evaluation parameters consisting of "meat flavor", "richness", "complexity", "flavor", "saltiness", bitterness", "sweetness", "sourness", "foretaste" and "aftertaste" according to the aforementioned evaluation criteria based on a score of 4 for each evaluation parameter in the evaluations of the Seasoning A serving as a control. Here, "foretaste" refers the rapid onset of taste in the mouth, and indicates the punch or impact of the taste. In addition, "aftertaste" refers to the degree to which taste persists in the mouth. The evaluation results were averaged and shown in Table 2 and FIG. 1.

In addition, a comparative sensory evaluation relating to preference was also carried out on the sample of Comparative Example 1 and samples of Examples 1, 3 and 5. The comparative sensory evaluation was carried out by having 11 in-house panelists indicate which sample they preferred based on its preferable and/or potent meat flavor. The values shown in Table 3 indicate the number of panelists who judged the sample to be preferable and/or potent in each group.

**[Table 2]**

| | Blend No. | Content of yeast extract having high glutamic acid content (wt%) | Meat flavor | Richness | Compplexity | Flavor | Saltiness | Bitterness | Sweetness | Sourness | Foretaste | Aftertaste |
|---|---|---|---|---|---|---|---|---|---|---|---|---|
| Comp. Ex.1 | SA | 0% | 4 | 4 | 4 | 4 | 4 | 4 | 4 | 4 | 4 | 4 |
| Ex.3 | S3 | 6% | 4.8 | 5.1 | 4.5 | 5.3 | 5.1 | 3.5 | 4.1 | 3.6 | 5.5 | 4.9 |
| Ex.5 | S5 | 12% | 5.3 | 5.2 | 4.9 | 5.5 | 5.4 | 3.5 | 4.9 | 3.7 | 5.6 | 5.5 |
| Ex.1 | S1 | 16% | 5.5 | 5.4 | 4.9 | 5.8 | 5.4 | 3.6 | 4.6 | 4.3 | 5.5 | 5.7 |

**[Table 3]**

| | Comp. Ex. 1 | Example 3 |
|---|---|---|
| Preferred | 0 | 11 |

| | Comp. Ex. 1 | Example 5 |
|---|---|---|
| Preferred | 0 | 11 |

| | Comp. Ex. 1 | Example 1 |
|---|---|---|
| Preferred | 0 | 11 |

### <<Evaluation 3: Parameter Sensory Evaluation 1 of Yeast Extract having High Glutathione Content>>

Seasonings 1 and 10 to 16 (Examples 1 and 10 to 16) and Seasonings A, E and F(Comparative Examples 1, 5 and 6) were respectively added to hot water at 70°C at 0.7% by weight (salt content: 0.3% by weight) followed by carrying out a sensory evaluation. The sensory evaluation was carried out in the form of a blind test using 11 in-house panelists, and the seasonings were evaluated for evaluation parameters consisting of "meat flavor", "richness" and "flavor" according to the aforementioned evaluation criteria based on a score of 4 for each evaluation parameter in the evaluations of the Seasoning A serving as a control. The evaluation results were averaged and shown in Table 4.

**[Table 4]**

| | Blend No. | Content of yeast extract having high glutamic acid content (wt%) | Content of yeast extract having high glutathione content (wt%) | Content of control yeast extract (wt%) | Heating | Sensory Evaluation | | |
|---|---|---|---|---|---|---|---|---|
| | | | | | | Meat flavor | Flavor | Richness |
| Comp. Ex.6 | SF | 16 | 0 | 19 | ○ | 3 | 4.5 | 3.5 |
| Ex.10 | S10 | 16 | 5 | 13 | ○ | 4.3 | 4.8 | 4.6 |
| Ex.11 | S11 | 16 | 8 | 10 | ○ | 5.1 | 5.3 | 5.1 |
| Ex.12 | S12 | 16 | 11 | 7 | ○ | 5.3 | 5.3 | 5.2 |
| Ex.13 | S13 | 16 | 14 | 4 | ○ | 5.4 | 5.5 | 5.2 |
| Ex.14 | S14 | 16 | 17 | 1 | ○ | 5.4 | 5.8 | 5.3 |
| Ex.1 | S1 | 16 | 19 | 0 | ○ | 5.5 | 5.8 | 5.4 |
| Ex.15 | S15 | 16 | 22 | 0 | ○ | 5.5 | 5.3 | 5.7 |
| Ex.16 | S16 | 16 | 25 | 0 | ○ | 5.1 | 5.3 | 5.8 |
| Comp. Ex.1 | SA | 0 | 19 | 16 | ○ | 4 | 4 | 4 |
| Comp. Ex.5 | SE | 16 | 19 | 0 | -- | 3.5 | 4.7 | 4.5 |

### <<Evaluation 4: Application Test (Consomme Soup)>>

Consomme soup prepared by dissolving 1.0% by weight of processed Knorr Bouillon KF (beef-free consomme soup, Ajinomoto Corp.) in hot water at 70°C was used as a control consomme soup (control sample). Consomme soup obtained by adding 0.35% by weight of either Seasoning 1 (Example 1) or Seasoning A (Comparative Example 1) was used as seasoning-containing consomme soup (test sample), followed by carrying out a sensory evaluation. Furthermore, the salt content of each sample was corrected so as to be constant. The sensory evaluation was carried out in the form of a blind test using 11 in-house panelists, and the soups were evaluated for evaluation parameters consisting of "meat flavor", "richness", "complexity", "flavor", "saltiness", bitterness", "sweetness", "sourness", "foretaste" and "aftertaste" according to the aforementioned evaluation criteria based on a score of 4 for each evaluation parameter in the evaluations of the control sample. The evaluation results were averaged and shown in Table 5 and FIG. 2.

In addition, a comparative sensory evaluation relating to preference was also carried out on the control sample and test sample. The comparative sensory evaluation was carried out by having 11 in-house panelists indicate which consomme soup they preferred based on its preferable and/or potent meat flavor. The values shown in Table 6 indicate the number of panelists who judged the sample to be preferable and/or potent in each group.

**[Table 5]**

| | Meat flavor | Richness | Compplexity | Flavor | Saltiness | Bitterness | Sweetness | Sourness | Foretaste | Aftertaste |
|---|---|---|---|---|---|---|---|---|---|---|
| Control consomme soup | 4 | 4 | 4 | 4 | 4 | 4 | 4 | 4 | 4 | 4 |
| Consomme soup containing Seasoning A | 4.9 | 5.1 | 5.1 | 5.1 | 4.4 | 4.1 | 4.4 | 4.4 | 5 | 4.6 |
| Consomme soup containing Seasoning 1 | 5.8 | 6 | 5.5 | 5.8 | 5.1 | 4 | 4.8 | 4 | 5.9 | 5.6 |

**[Table 6]**

| | Preferred |
|---|---|
| Control consomme soup | 0 |
| Consomme soup containing Seasoning A | 1 |
| Consomme soup containing Seasoning 1 | 10 |

### (Examples 17 and 18 - Comparative Examples - and Comparative Examples 7 and 8)

Seasonings 17 and 18 of Examples 17 and 18 and Seasonings G and H of Comparative Examples 7 and 8 were obtained in the same manner as Example 1 with the exception of changing the heating temperature in Example 1 to 100°C, 150°C, 80°C and 180°C, respectively, as shown in Table 7.

### <<Evaluation 5: Parameter Sensory Evaluation of Heating Temperature>>

Seasonings 1, 17 and 18 (Examples 1, 17 and 18) and Seasonings G and H (Comparative Examples 7 and 8) were respectively added to hot water at 70°C at 0.7% by weight (salt content: 0.3% by weight), and a sensory evaluation was carried out using each of the resulting samples . The sensory evaluation was carried out in the form of a blind test using 11 in-house panelists, the seasonings were evaluated for evaluation parameters consisting of "meat flavor", "roasted flavor" and "off-flavor" according to the following evaluation criteria, and the evaluations selected by the most panelists were recorded. The evaluation results are shown in Table 7.

### [Evaluation Criteria]

+++: Extremely potent and prominent
++: Potent and/or distinct
+: Present and/or weak
±: Absent and/or unable to be detected

**[Table 7]**

| | Blend No. | Heating temperature | Meat flavor | Roasted flavor | Off-flavor |
|---|---|---|---|---|---|
| Comp.Ex.7 | SG | 80°C | + | ± | + |
| Ex.17 | S17 | 100°C | ++ | + | + |
| Ex.1 | S1 | 120°C | +++ | + | + |
| Ex.18 | S18 | 150°C | ++ | ++ | ++ |
| Comp.Ex.8 | SH | 180°C | + | +++ | +++ |

### (Examples 19 to 23 - Comparative Examples - and Comparative Example 9)

Seasonings 19 to 23 of Examples 19 to 23 and Seasoning I of Comparative Example 9 were obtained in the same manner as Example 1 with the exception of changing the pH of the mixture in Example 1 to 3, 4, 6, 7, 8 and 2, respectively, as shown in Table 8.

### <<Evaluation 6: Parameter Sensory Evaluation of pH>>

Seasonings 1 and 19 to 23 (Examples 1 and 19 to 23) and Seasoning I (Comparative Example 9) were respectively added to hot water at 70°C at 0.7% by weight (salt content: 0.3% by weight), and a sensory evaluation was carried out using each of the resulting samples. The sensory evaluation was carried out in the form of a blind test using 11 in-house panelists, the seasonings were evaluated for evaluation parameters consisting of "meat flavor", "roasted flavor" and "off-flavor" according to the following evaluation criteria, and the evaluations selected by the most panelists were recorded. The evaluation results are shown in Table 8.

### [Evaluation Criteria]

+++: Extremely potent and prominent
++: Potent and/or distinct
+: Present and/or weak
±: Absent and/or unable to be detected

**[Table 8]**

| | Blend No. | pH | Meat flavor | Roasted flavor | Off-flavor |
|---|---|---|---|---|---|
| Comp.Ex.9 | SI | 2 | + | ± | + |
| Ex.19 | S19 | 3 | ++ | ± | ± |
| Ex.20 | S20 | 4 | +++ | + | ± |
| Ex.1 | S1 | 5 | +++ | + | + |
| Ex.21 | S21 | 6 | +++ | + | + |
| Ex.22 | S22 | 7 | ++ | ++ | ++ |
| Ex.23 | S23 | 8 | ++ | ++ | ++ |

### (Examples 24 to 28 - Comparative Examples - and Comparative Example 10)

Seasonings 24 to 28 of Examples 24 to 28 and Seasoning J of Comparative Example 10 were obtained in the same manner as Example 1 with the exception of changing the xylose (reducing sugar) content in Example 1 from 3.0% by weight to 0.0% by weight, 0.5% by weight, 1.0% by weight, 2.0% by weight, 5.0% by weight and 10.0% by weight, respectively, as shown in Table 9.

### «Evaluation 7: Parameter Sensory Evaluation of Reducing Sugar»

Seasonings 1 and 24 to 28 (Examples 1 and 24 to 28) and Seasoning J (Comparative Example 10) were respectively added to hot water at 70°C at 0.7% by weight (salt content: 0.3% by weight), and a sensory evaluation was carried out using each of the resulting samples. The sensory evaluation was carried out in the form of a blind test using 11 in-house panelists, the seasonings were evaluated for evaluation parameters consisting of "meat flavor", "roasted flavor" and "off-flavor" according to the following evaluation criteria, and the evaluations selected by the most panelists were recorded. The evaluation results are shown in Table 9.

### [Evaluation Criteria]

+++: Extremely potent and prominent
++: Potent and/or distinct
+: Present and/or weak
±: Absent and/or unable to be detected

**[Table 9]**

| | Blend No. | Reducing sugar (wt%) | Meat flavor | Roasted flavor | Off-flavor |
|---|---|---|---|---|---|
| Ex.24 | S24 | 0.0 | ++ | ± | ± |
| Ex.25 | S25 | 0.5 | ++ | ± | ± |
| Ex.26 | S26 | 1.0 | ++ | + | + |
| Ex.27 | S27 | 2.0 | ++ | + | + |
| Ex. 1 | S1 | 3.0 | +++ | + | + |
| Ex.28 | S28 | 5.0 | + | ++ | ++ |
| Comp.Ex.10 | SJ | 10.0 | ± | +++ | +++ |

### (Example 29)

A mixture was first prepared by mixing 16% by weight of a yeast extract having a high glutamic acid content (Hyper Meast HG, glutamic acid content: 18% by weight or more, Asahi Food & Healthcare Co., Ltd.), 19% by weight of a yeast extract having a high glutathione content (High Thione Extract YH-15, glutathione content: 15% by weight or more, Kohjin Co., Ltd.), 3.0% by weight of xylose, 14% by weight of salt and 48% by weight of water in the same manner as Example 1. Next, 80 parts by weight of oil in the form of sunflower oil was added to and mixed with 20 parts by weight of the resulting mixture, and the resulting suspension was heated for 30 minutes at 120°C. Following completion of the reaction, the suspension was allowed to stand undisturbed and cool followed by fractionating only the separated upper layer (oil layer) to obtain a Seasoning 29. Furthermore, the pH of the mixture was 5.0 (non-adjusted) .

### (Comparative Example 11)

Seasoning K of Comparative Example 11 was obtained in the same manner as Example 29 with the exception of only adding and mixing the oil in Example 29 without heating.

### (Examples 30 and 31)

First, a mixture obtained by mixing 16% by weight of a yeast extract having a high glutamic acid content (Hyper Meast HG, glutamic acid content: 18% by weight or more, Asahi Food & Healthcare Co., Ltd.), 19% by weight of a yeast extract having a high glutathione content (High Thione Extract YH-15, glutathione content: 15% by weight or more, Kohjin Co., Ltd.), 3.0% by weight of xylose, 14% by weight of salt and 48% by weight of water in the same manner as Example 1 was heated for 30 minutes at 120°C.

Next, 80 parts by weight of oil in the form of sunflower oil was added to and mixed with 20 parts by weight of the resulting heated mixture, and the resulting suspension was heated for 30 minutes at 120°C. Following completion of the reaction, the suspension was allowed to stand undisturbed and cool followed by fractionating only the separated upper layer (oil layer) to obtain a Seasoning 30.

In addition, Seasoning 31 of Example 31 was obtained in the same manner as Example 30 with the exception of only adding and mixing 80 parts by weight of sunflower oil to 20 parts by weight of the heated mixture without heating.

### (Comparative Examples 12 and 13)

Seasoning L of Comparative Example 12 was obtained in the same manner as Example 29 with the exception of changing the formulation of the yeast extract in Example 29 as shown in Table 10.

In addition, Seasoning M of Comparative Example 13 was obtained in the same manner as Comparative Example 12 with the exception of only adding and mixing the oil in Comparative Example 12 without heating.

### (Comparative Examples 14 and 15)

Seasonings N and O of Comparative Examples 14 and 15 were obtained in the same manner as Example 29 with the exception of changing the formulation of the yeast extract in Example 29 as shown in Table 11.

### <<Evaluation 8: Sensory Evaluation of Flavoring Oil>>

Seasonings 29 to 31 (Examples 29 to 31) and Seasonings K to M (Comparative Examples 11 to 13) were respectively added to hot water at 70°C at 0.7% by weight (salt content: 0.3% by weight), and a sensory evaluation was carried out using each of the resulting samples. The sensory evaluation was carried out in the form of a blind test using 7 in-house panelists, and the seasonings were evaluated for evaluation parameters consisting of "meat flavor", "roasted flavor" and "off-flavor" according to the evaluation criteria used in Evaluation 1 based on a score of 4 for each evaluation parameter in the evaluations of the Seasoning A serving as a control. The evaluation results were averaged and shown in Table 10.

In addition, the results of carrying out a similar sensory evaluation on Seasoning 29 (Example 29) and Seasonings N to O (Comparative Examples 14 and 15) were averaged and shown in Table 11.

**[Table 10]**

| | Blend No. | Content of yeast extract having high glutamic acid content (wt%) | Content of yeast extract having high glutathione content (wt%) | Content of control yeast extract (wt%) | Heating of mixture | Addition of oil | Heating with oil | Sensory Evaluation | | |
|---|---|---|---|---|---|---|---|---|---|---|
| | | | | | | | | Meat flavor | Roasted flavor | Off-flavor |
| Ex.29 | S29 | 16 | 19 | 0 | -- | ○ | ○ | 6.1 | 5.6 | 4.4 |
| Comp.Ex.11 | SK | 16 | 19 | 0 | -- | ○ | -- | 4.7 | 4.3 | 4.3 |
| Ex.30 | S30 | 16 | 19 | 0 | ○ | ○ | ○ | 5.4 | 5.9 | 5.1 |
| Ex. 31 | S31 | 16 | 19 | 0 | ○ | ○ | -- | 5.1 | 5.0 | 4.4 |
| Comp.Ex.12 | SL | 0 | 0 | 35 | -- | ○ | ○ | 4.7 | 6.0 | 4.9 |
| Comp.Ex.13 | SM | 0 | 0 | 35 | -- | ○ | -- | 4.4 | 4.4 | 4.4 |

**[Table 11]**

| | Blend No. | Content of yeast extract having high glutamic acid content (wt%) | Content of yeast extract having high glutathione content (wt%) | Content of control yeast extract (wt%) | Heating of mixture | Addition of oil | Heating with oil | Sensory Evaluation | | |
|---|---|---|---|---|---|---|---|---|---|---|
| | | | | | | | | Meat flavor | Roasted flavor | Off-flavor |
| Ex.29 | S29 | 16 | 19 | 0 | -- | ○ | ○ | 6.4 | 5.4 | 4.6 |
| Comp.Ex.14 | SN | 35 | 0 | 0 | -- | ○ | ○ | 5.1 | 5.6 | 5.0 |
| Comp.Ex.15 | SO | 0 | 19 | 16 | -- | ○ | ○ | 5.4 | 5.0 | 4.7 |

### (Examples 32 and 33)

Seasonings 32 and 33 of Examples 32 and 33 were obtained in the same manner as Example 29 with the exception of changing the oil as shown in Table 12.

### (Comparative Examples 16 and 17)

Seasonings P and Q of Comparative Examples 16 and 17 were obtained in the same manner as Examples 32 and 33 with the exception of only adding and mixing the oil in Examples 32 and 33 without heating.

### <<Evaluation 9: Sensory Evaluation of Oil>>

Seasonings 29, 32 and 33 (Examples 29, 32 and 33) and Seasonings K, P and Q (Comparative Examples 11, 16 and 17) were respectively added to hot water at 70°C at 0.7% by weight (salt content: 0.3% by weight), and a sensory evaluation was carried out using each of the resulting samples . The sensory evaluation was carried out in the form of a blind test using 7 in-house panelists, the seasonings were evaluated for evaluation parameters consisting of "meat flavor" and "oxidized odor" according to the evaluation criteria indication below, and the evaluations selected by the most panelists were recorded. The evaluation results are shown in Table 12.

Furthermore, "oxidized odor" refers to the odor of oxidized oil generated when oil is heated.

### [Evaluation Criteria]

+++: Extremely potent and prominent
++: Potent and/or distinct
+: Present and/or weak
±: Absent and/or unable to be detected

**[Table 12]**

| | Blend No. | Oil | Heating of oil | Sensory Evaluation | |
|---|---|---|---|---|---|
| | | | | Meat flavor | Oxidized odor |
| Ex.29 | S29 | Sunflower oil | ○ | +++ | ± |
| Ex.32 | S32 | Palm oil | ○ | +++ | + |
| Ex.33 | S33 | Canola oil | ○ | ++ | ++ |
| Comp.Ex.11 | SK | Sunflower oil | - | ± | ± |
| Comp.Ex.16 | SP | Palm oil | - | ± | ± |
| Comp.Ex.17 | SQ | Canola oil | - | ± | ± |

### (Examples 34 to 37 and Comparative Example 18)

Seasonings 34 to 37 of Examples 34 and 37 and Seasoning R of Comparative Example 18 were obtained in the same manner as Example 29 with the exception of changing the content of the mixture in Example 29 (content of the mixture based on the total weight of the mixture and oil) from 20% by weight to the contents shown in Table 13.

### <<Evaluation 10: Parameter Sensory Evaluation of Mixture Content>>

Seasonings 29 and 34 to 37 (Examples 29 and 34 to 37) and Seasoning R (Comparative Example 18) were respectively added to hot water at 70°C at 0.7% by weight (salt content: 0.3% by weight), and a sensory evaluation was carried out using each of the resulting samples. The sensory evaluation was carried out in the form of a blind test using 7 in-house panelists, the seasonings were evaluated for the intensity of flavor generation to levels ranging from "±" (flavor absent or unable to be detected) to one of five levels from "+" to "+++++", and the evaluations selected by the most panelists were recorded. The evaluation results are shown in Table 13.

**[Table 13]**

| | Blend No. | Content of mixture (wt%) | Intensity of flavor generation |
|---|---|---|---|
| Comp.Ex.18 | SR | 0 | ± |
| Ex.34 | S34 | 1 | ++ |
| Ex. 35 | S35 | 3 | +++ |
| Ex.36 | S36 | 5 | +++ |
| Ex. 37 | S37 | 10 | ++++ |
| Ex.29 | S29 | 20 | +++++ |

## Claims

1. A method for producing a seasoning, comprising the steps of:
a) adding an oil to a mixture containing:
6% by weight to 21% by weight of a yeast extract having a high glutamic acid content in which the glutamic acid content thereof is 10% by weight or more, and
8% by weight to 25% by weight of a yeast extract having a high glutathione content in which the glutathione content thereof is 5% by weight or more, and
water; and
b) heating the mixture at 90°C to 130°C, for 1 minute to 4 hours, and at a pH of 3 to 8, and
c) fractionating the oil layer from the product obtained following thermal reaction of step b) so as to obtain a seasoning in the form of a flavoring oil.

2. The method for producing a seasoning according to claim 1, wherein the mixture contains 9% by weight to 18% by weight of the yeast extract having a high glutamic acid content.

3. The method for producing a seasoning according to claim 1, wherein the mixture contains 11% by weight to 20% by weight of the yeast extract having a high glutathione content.

4. The method for producing a seasoning according to any of claims 1 to 3, wherein the mixture further contains a reducing sugar.

5. The method for producing a seasoning according to claim 4, wherein the reducing sugar is at least one type selected from the group consisting of xylose, glucose, fructose, sucrose, maltose, arabinose, lactose and ribose.

6. The method for producing a seasoning according to claim 1, wherein step c) is carried out by allowing the product obtained following thermal reaction of step b) to stand undisturbed and cool, followed by fractionating the separated upper oil layer to obtain a seasoning.

7. The method for producing a seasoning according to any one of claims 1 to 6, wherein the oil is at least one type selected from the group consisting of sunflower oil, palm oil, canola oil and soybean oil.

8. The method for producing a seasoning according to any of one of claims 1 to 7, wherein the content of the mixture is 0.5% by weight or more based on the total weight of the mixture and the oil.

## Patentansprüche

1. Verfahren zum Herstellen eines Würzmittels, umfassend die Schritte:
a) Hinzufügen eines Öls zu einer Mischung, enthaltend:
6 Gew.-% bis 21 Gew.-% eines Hefeextraktes mit einem hohen Glutaminsäuregehalt, in dem der Glutaminsäuregehalt davon 10 Gew.-% oder mehr beträgt, und
8 Gew.-% bis 25 Gew.-% eines Hefeextraktes mit einem hohen Glutathiongehalt, in dem der Glutathiongehalt davon 5 Gew.-% oder mehr, und
Wasser beträgt ; und
b) Erhitzen der Mischung auf 90° C bis 130° C, über 1 Minute bis 4 Stunden, und bei einem ph-Wert von 3 bis 8, und
c) Fraktionieren der Ölschicht von dem erhaltenen Produkt im Anschluss an die thermische Reaktion des Schritts b) derart, dass ein Würzen in der Form eines aromatischen Öls erhalten wird.

2. Verfahren zum Herstellen eines Würzmittels gemäß Anspruch 1, wobei die Mischung 9 Gew.-% bis 18 Gew.-% des Hefeextraktes enthält, der einen hohen Glutaminsäuregehalt aufweist.

3. Verfahren zum Herstellen eines Würzmittels gemäß Anspruch 1, wobei die Mischung 11 Gew.-% bis 20 Gew.-% des Hefeextraktes enthält, der einen hohen Glutathiongehalt aufweist.

4. Verfahren zum Herstellen eines Würzmittels gemäß irgendeinem der Ansprüche 1 bis 3, wobei die Mischung weiterhin einen reduzierenden Zucker enthält.

5. Verfahren zum Herstellen eines Würzmittels gemäß Anspruch 4, wobei der reduzierende Zucker wenigstens ein Typ ist, der aus der Gruppe ausgewählt ist, bestehend aus Xylose, Glukose, Fruktose, Sukrose, Maltose, Arabinose, Laktose und Ribose.

6. Verfahren zum Herstellen eines Würzmittels gemäß Anspruch 1, wobei Schritt c) dadurch durchgeführt wird, dass das Produkt, das im Anschluss an die thermische Reaktion des Schritts b) erhalten wird, ungestört und kühl stehen gelassen wird, gefolgt vom Fraktionieren der getrennten oberen Ölschicht, um ein Würzen zu erhalten.

7. Verfahren zum Herstellen eines Würzmittels gemäß irgendeinem der Ansprüche 1 bis 6, wobei das Öl wenigstens ein Typ ist, der aus der Gruppe ausgewählt ist, bestehend aus Sonnenblumenöl, Palmöl, Rapsöl und Sojaöl.

8. Verfahren zum Herstellen eines Würzmittels gemäß irgendeinem der Ansprüche 1 bis 7, wobei der Gehalt der Mischung 0,5 Gew.-% oder mehr, basierend auf dem Gesamtgewicht der Mischung und des Öls beträgt.

## Revendications

1. Procédé de fabrication d'un assaisonnement comprenant les étapes consistant à :
a) ajouter une huile à un mélange contenant :
entre 6 % en poids et 21 % en poids d'un extrait de levure ayant une teneur élevée en acide glutamique, dans lequel la teneur en acide glutamique est de 10 % en poids ou plus, et
entre 8% en poids et 25 % en poids d'un extrait de levure ayant une teneur élevée en glutathion, dans lequel la teneur en glutathion est de 5 % en poids ou plus, et
de l'eau ; et
b) chauffer le mélange entre 90 °C et 130 °C, pendant 1 minute à 4 heures, et à un pH de 3 à 8, et
c) fractionner la couche d'huile du produit obtenu à la suite de la réaction thermique de l'étape b) de manière à obtenir un assaisonnement sous forme d'une huile aromatisante.

2. Procédé de production d'un assaisonnement selon la revendication 1, dans lequel le mélange contient entre 9 % en poids et 18 % en poids de l'extrait de levure ayant une teneur élevée en acide glutamique.

3. Procédé de production d'un assaisonnement selon la revendication 1, dans lequel le mélange contient entre 11 % en poids et 20 % en poids de l'extrait de levure ayant une teneur élevée en glutathion.

4. Procédé de fabrication d'un assaisonnement selon l'une quelconque des revendications 1 à 3, dans lequel le mélange contient en outre un sucre réducteur.

5. Procédé de production d'un assaisonnement selon la revendication 4, dans lequel le sucre réducteur est au moins un type choisi dans le groupe constitué par le xylose, le glucose, le fructose, le saccharose, le maltose, l'arabinose, le lactose et le ribose.

6. Procédé de production d'un assaisonnement selon la revendication 1, dans lequel l'étape c) est réalisée en laissant le produit obtenu après la réaction thermique de l'étape b) reposer et refroidir, suivi d'un fractionnement de la couche supérieure d'huile séparée pour obtenir un assaisonnement.

7. Procédé de production d'un assaisonnement selon l'une quelconque des revendications 1 à 6, dans lequel l'huile est au moins un type choisi dans le groupe constitué par l'huile de tournesol, l'huile de palme, l'huile de canola et l'huile de soja.

8. Procédé de production d'un assaisonnement selon l'une quelconque des revendications 1 à 7, dans lequel la teneur du mélange est de 0,5 % en poids ou plus par rapport au poids total du mélange et de l'huile.
